(19) Europäisches Patentamt
European Patent Office
Office européen des brevets

(11) **EP 2 722 694 A1**

(12) **EUROPEAN PATENT APPLICATION**

(43) Date of publication:
**23.04.2014 Bulletin 2014/17**

(51) Int Cl.:
***G02B 5/18*** *(2006.01)*

(21) Application number: **12188757.4**

(22) Date of filing: **17.10.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicants:<br>• **Asociación Industrial de Óptica, Color e Imagen - AIDO**<br>  **46980 Paterna (ES)**<br>• **Vinci Energia, COOP.V.**<br>  **46980 Paterna (ES)**<br><br>(72) Inventors:<br>• **García Monreal, Javier**<br>  **46980 Paterna (ES)** | • **Micó Serrano, Vicente**<br>  **46980 Paterna (ES)**<br>• **Wallhead, Ian**<br>  **46980 Paterna (ES)**<br>• **García Ortiz, Jose Vicente**<br>  **46980 Paterna (ES)**<br>• **Gonzàlez Toledo, Jose Ignacio**<br>  **46980 Paterna (ES)**<br>• **Gonzàlez Toledo, Cristóbal**<br>  **46980 Paterna (ES)**<br><br>(74) Representative: **Carvajal y Urquijo, Isabel et al**<br>  **Clarke, Modet & Co.**<br>  **C/ Goya, 11**<br>  **28001 Madrid (ES)** |

(54) **Multi-order diffractive optical element for concentration of broadband electromagnetic radiation**

(57) An optical element for collecting broadband electromagnetic radiation includes an input face and an output face. The first input face receives electromagnetic radiation of many wavelengths consistent with a broadband spectrum such as the sun. At the second output surface the light exits the optical element in the direction towards a focus where the electromagnetic energy is received by a receiver. One or both of the first input and second output surfaces incorporates a multi-order diffractive component which contributes in whole or in part to the deviation of light rays from their incident direction toward the region of the focus of the optical element.

Fig. 6

EP 2 722 694 A1

**Description**

**FIELD OF THE INVENTION**

The invention is in the field of optical design of a non-imaging lens which is used for the concentration of electromagnetic energy (in particular, solar energy) by means of a multi-order diffractive optical element.

**BRIEF DESCRIPTION OF THE DRAWINGS**

Figure 1     General description of a known diffraction grating.

Figure 2     Detail of a known diffraction grating with small apertures.

Figure 3     Detail of a known diffraction grating with larger apertures.

Figure 4     Detail of a known diffraction grating constructed with prisms.

Figure 5     Detail of a known diffraction grating, twice of that in figure 4.

Figure 6     Example of a cross section through a series of microprisms of a multiorder diffractive optical element.

Figure 7     Conventional refracting lens and a Fresnel lens.

Figure 8     Another embodiment of the invention.

Figure 9     Prior art micro-Fresnel lens. Micro-Fresnel lens with prisms at a constant pitch. Cross sections show the prism profile near the centre of the lens and also near the edge

Figure 10     A multi-order diffractive lens according to the invention is shown. Cross sections show the prism profile near the centre of the lens and also near the edge.

Figure 11     Performance of the two lenses at different wavelengths. The multi-order lens focuses light of 500nm and 1000nm to a very small spot.

**PRIOR ART**

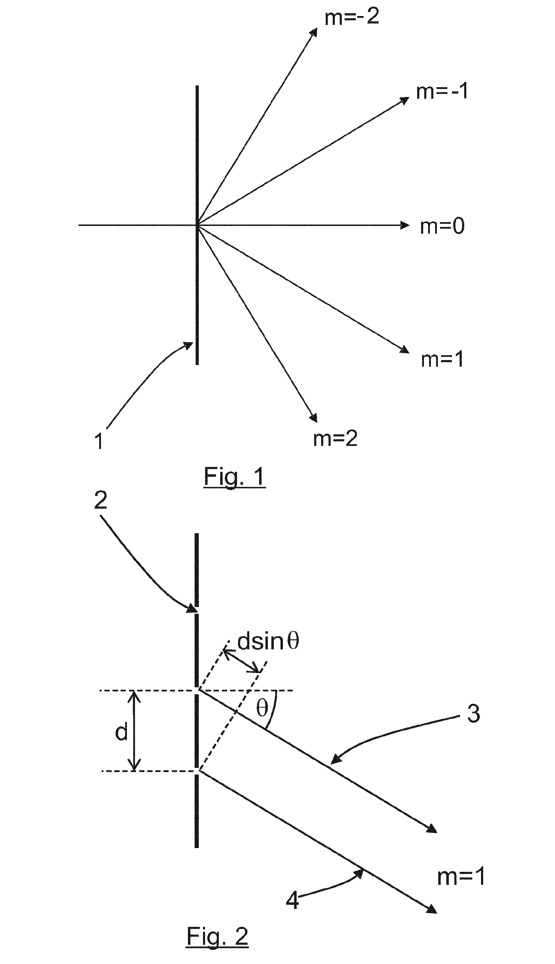

There is a demand to collect energy from a large cross-sectional area and concentrate it into a smaller region where it can then be converted into other forms of energy (electrical, thermal). Since this is an energy collection application, it is important to maximise the energy collection efficiency.
Diffractive optical elements are well known especially in their form as a diffraction grating. Figure 1 depicts a typical diffraction grating (1) whereby light from the left is incident on a material which has a series of small apertures or slits. In such an arrangement light splits into diffraction orders (m=0, m=1 etc.) which proceed in different directions. The order m=-1 is an identical angle to order m=1 and each can be referred to as the *first order.* Labelling m=1 or m=-1 is simply a matter of sign convention.
Figure 2 depicts the detail of a diffraction grating and shows a series of apertures or slits (2) separated by a pitch (d). Rays are shown (3 and 4) diffracted along the m=1 order. Other diffraction orders are not shown for convenience. In principle, light diffracts in all directions but in certain directions a geometrical condition is met whereby light from all apertures (2) propagates in phase and constructively interferes some (relatively large) distance away. For first order diffraction this occurs when the distance $d\sin\theta$ *is* equal to one wavelength ($\lambda$) of the light. In general, for all orders constructive interference occurs when the following equation is met:

$$m\lambda = d\sin\theta \hspace{4cm} \text{Eqn (1)}$$

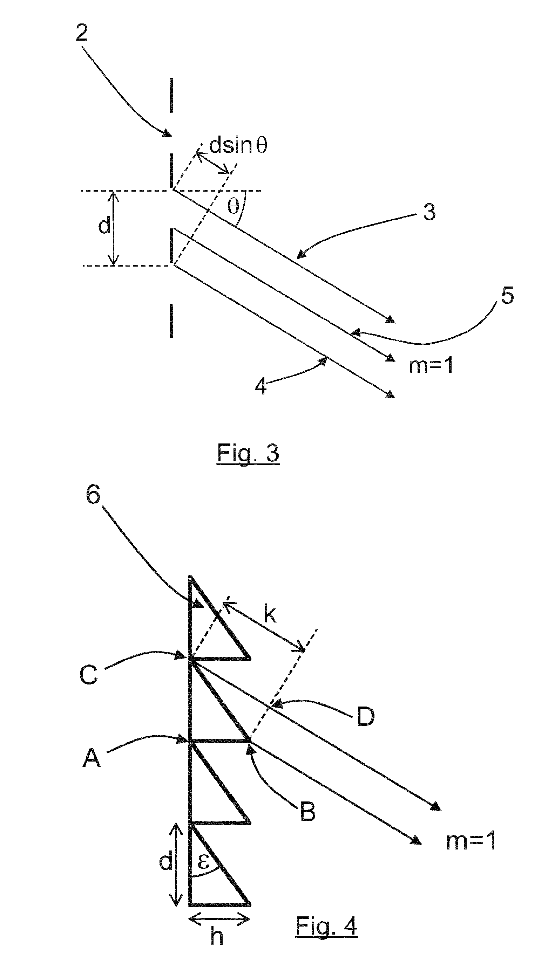

Figure 3 depicts a similar diffraction grating but is different in that apertures (2) are now larger. Rays (3) and (4) still meet the condition of equation (1) and so still undergo constructive interference for the m=1 order. However, ray (5), from the same aperture as ray (3), will not constructively interfere with ray (3). In fact, all rays emerging from within an aperture such as all those between rays (3) and (5) will not be completely in phase with each other although they will be in phase and constructively interfere with analogous rays from other apertures. The degree to which rays from within an aperture constructively interfere affects the proportion of light which is diffracted into that order. Note that for the case of figure 3 all rays which pass into the m=0 order constructively interfere.

Figure 4 depicts another similar grating where small prisms (6) replace the apertures (2). This is often referred to as a Blaze grating. The prisms (6) have a dimension (d) and also a pitch (d). The angle ($\epsilon$) of the prism can be chosen such that the optical path length (AB) as the light propagates a distance (h) in the prism material of refractive index (n) is the same as the optical path length in the background material, usually air with n=1, (CD). When this is the case the rays at point (B) and (D) are in phase and will constructively interfere. In fact, all rays passing in this direction between (B) and (D) will also be in phase. The resulting effect is that all rays of a given wavelength from all prisms can be in phase in a chosen diffraction order. The light would then be described as having been diffracted efficiently in that order. If, however, a different wavelength ($\lambda$) is incident on the grating of figure 4 the light will diffract at a different angle and not efficiently. For example, if the grating diffracts efficiently into order m=1 at an angle ($\theta$) for a wavelength of 0.5$\mu$m (green), light of wavelength 1$\mu$m (infra red) will diffract at a larger angle according to equation (1). This light will also be distributed into various diffraction additional orders (m=0, m=2 etc.). This is a known disadvantage of diffractive elements; they are very sensitive to the wavelength of the incident light.

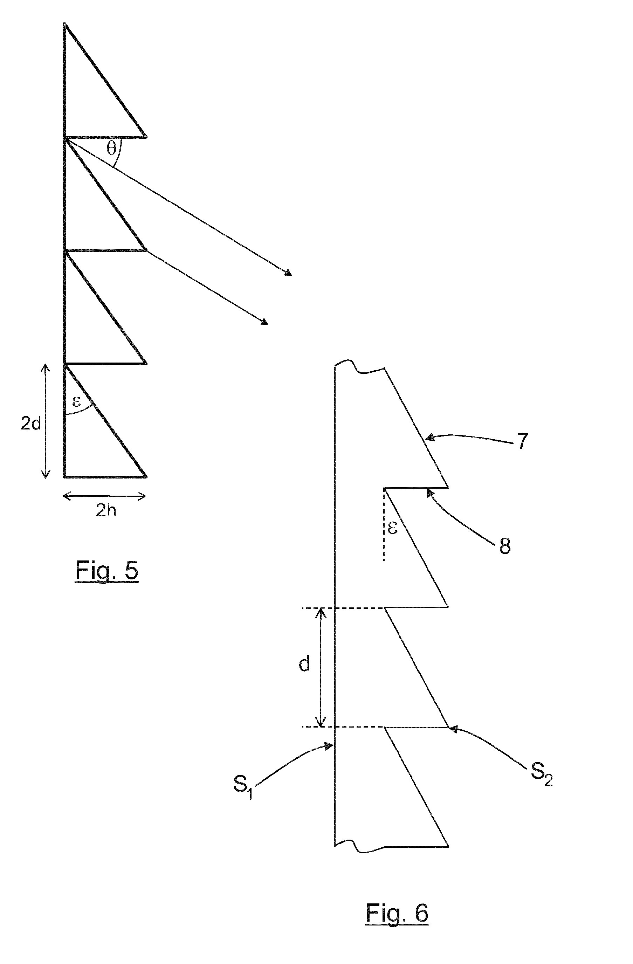

Consider now a similar grating to figure 4 which is depicted in figure 5. The grating in figure 5 is exactly twice the dimensions of that in figure 4 but the prism angle ($\epsilon$) is the same. Referring to equation (1), if the prism pitch (d) is now twice as large then first order diffraction (m=1) will occur at angle ($\theta$) for light of twice the original wavelength ($\lambda$). For example if the original wavelength were 0.5$\mu$m then light of 1$\mu$m wavelength would exhibit first order diffraction at an angle ($\theta$). However, at the original wavelength of 0.5$\mu$m second order diffraction will also occur (m=2) at the same angle ($\theta$). If the refractive index of the material (n) is the same or similar at both wavelengths then both wavelengths will have been diffracted efficiently at the same angle. What figure 5 describes is a simple multi-order diffractive element where the multi-order (q) is 2 and the design wavelength ($\lambda$) is ($\lambda_D$), which in this case is 0.5$\mu$m. The design diffraction angle would be described as ($\theta_D$) and the material refractive index at the design wavelength would be described as ($n_D$). This principle can be extended to more diffraction orders with the effect that more wavelengths will be diffracted efficiently into the same angle ($\theta_D$). Multi-order diffractive lenses are ideal candidates for applications where a number of fixed wavelengths need to be focused at the same point. They are also offer advantages over conventional lenses where a lens needs to be thin.

Besides above known devices, there are also several patent documents, which describe devices related to the present invention.

Patent US 5,589,982 describes a multi-order diffractive lens for applications of colour displays where the red green and blue wavelengths needs to be focused and also for colour laser printers.

Patents US 7,025,456,B2 and US 7,093,938 B2 and patent application US 2008/0278681 A1 all describe a multi-order diffractive surfaces for ophthalmic applications.

Lastly, a relationship between the prism angle and other optical parameters can be found in Sinzinger and M. Testorf, "Transition between diffractive and refractive micro-optical components," Appl. Opt. 34, 5970-5976 (1995).

## SUMMARY OF THE INVENTION

A first aspect of the invention is a multi-order diffractive lens for concentrating electromagnetic radiation, particularly solar energy from the complete solar spectrum from ultra-violet to infrared wavelengths, (hereafter referred to as "light") in a focal region, having this lens two faces ($S_1$, $S_2$):

  ● *a first face ($S_1$) that is where the incident light falls*
  The first face ($S_1$) is usually flat and smooth and the incident light will be in most of the applications the sun light. The sun light has the incident rays collimated because the source is deemed to be located at an infinite distance but the rays subtend an angle of 0.5° due to the extended size of the sun.
  ● *a second face ($S_2$) which comprises a plurality of diffractive elements which form the microprism facets of a multi-order diffractive optical element.*
  The microprism is formed by three facets, the first facet is the surface of the first face ($S_1$) of the lens, the second and the third facets are the two surfaces of the diffractive element.
  ● *the diffractive elements may be in the form of concentric rings which are concentric with respect to an axis (E) where the focal (F) region is.*
  The focal (F) region can be a single spot but the industrial applications require that the spot at the focus (F) is of a desired size and profile. This can also be done by designing the lens so that all or part of the lens produces a defocused spot at the focal region.

The invention requires that at least one of the surfaces ($S_1$, $S_2$) is adapted to diffract light by multi-order diffraction in such a way that many wavelengths are simultaneously diffracted toward the focal (F) region. The incident light passing through the diffractive lens whereby diffracting light at an angle ($\theta$) in dependence upon the pitch (d) of the prism when the prism pitch (d) is less than one wavelength ($\lambda$) of the light.

## DETAILED DESCRIPTION OF PARTICULAR EMBODIMENTS OF THE INVENTION

For the purpose of promoting an understanding of the principles of the invention, several embodiments of the present invention are described in this section. It will nevertheless be understood that no limitation of the scope of the invention is thereby intended.

Figure 6 depicts an example of a series of microprisms as it is proposed for the multi-order diffractive lens of the invention. Each prism has the upper facet (7) inclined and the lower facet (8) horizontal.

The term *horizontal* is used because the surface of this facet is viewed in the sectional view as a straight line, but it is a cylindrical surface. The term *inclined* is applied to the upper line (vertical axis) of figure 6 which is the sectional view of a conical surface. This interpretation should be applied to the rest of the description and the claims.

The light beam is coming from the left (according to the drawing) crossing the first face of the lens and is diffracted as a result of the discontinuities at facets (7) and (8). The light can diffract into various orders at various angles. These angles are determined by the pitch (d) of the microprisms and NOT the angle ($\epsilon$) of the facets (7) which would be the case for an apparently similar Fresnel lens. (Prisms of Fresnel lens are of larger size, typically several millimetres, so Geometrical Optics applies for describing light propagation.) The angle ($\epsilon$) of the facets (7), along with the wavelength of the light and the refractive index (n) of the lens material, determines how the diffracted optical power is distributed into the various diffraction orders. The explanation of the theory can be found in Sinzinger and M. Testorf's article and is briefly explained as follows:

Consider a beam of light diffracted through an angle ($\theta$). The relationship between the prism angle ($\epsilon$), the refractive index ($n_D$) of the prism material and the diffraction angle ($\theta$) are given by Eqn (2).

$$n_D \sin \varepsilon = \sin\left(\varepsilon + \theta\right)$$
$$\theta = \arcsin\left(n_D \sin \varepsilon\right) - \varepsilon$$

Eqn (2)

Thus, we can determine the transmission function for a repetition of many prism elements. If the number of repeating prisms is large, the diffraction of light of any wavelength will be into particular discrete orders. Hence, it is possible to determine specific angles ($\theta$) for each wavelength ($\lambda$) according to equation (3).

$$\sin \theta = \frac{m}{q} \frac{\lambda}{\lambda_D} \sin \theta_D$$

Eqn (3)

Where, $\lambda_D$ is the design wavelength and $\theta_D$ is the design diffraction angle.

It can then be shown that, since the sum of all diffracted orders has to be unity, the distribution of diffracted power into each order is given by equation (4).

$$\left|\tilde{p}_\lambda\left(\theta_m\right)\right|^2 = \sum \left|\mathrm{sinc}\left[m - q\frac{\lambda_D}{\lambda}\frac{(n-1)}{(n_D-1)}\right]\right|^2 = 1$$

Eqn(4)

In summary, for a given design of a diffractive optical element (design wavelength ($\lambda_D$), of refractive index ($n_D$) at the design wavelength, design order (q) and design angle of diffraction ($\theta_D$)), equation (3) describes the direction into which all orders of all other wavelengths will diffract. Equation (4) describes the intensity of those orders of those

wavelengths, ($\lambda$), for which the refractive index is n.

In one embodiment of the invention, a multi-order diffractive surface is made in the second surface ($S_2$) of a thin sheet of transparent material which is used to focus broadband radiation such as solar radiation. A conventional refracting lens (9) or Fresnel lens (10) would have to be manufactured from thicker material as depicted in figure 6 which would increase the cost of raw material and bulk absorption due to the material properties.

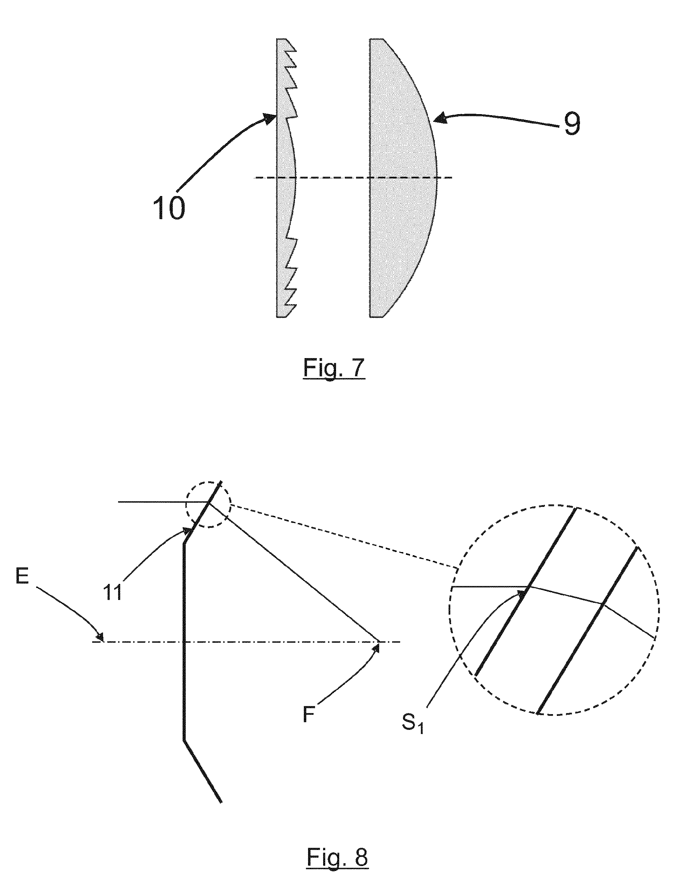

In another embodiment of the invention depicted in figure 8 the diffractive element may be tilted (11) in whole or part (either part of a sphere, asphere, cone or flat panel) so as to cause refraction at the first surface ($S_1$). This refraction will contribute to the total ray deviation of the diffractive optical element.

In order to better clarify the distinction between a multi-order diffractive lens and a simple Fresnel lens with small prisms consider the following examples.

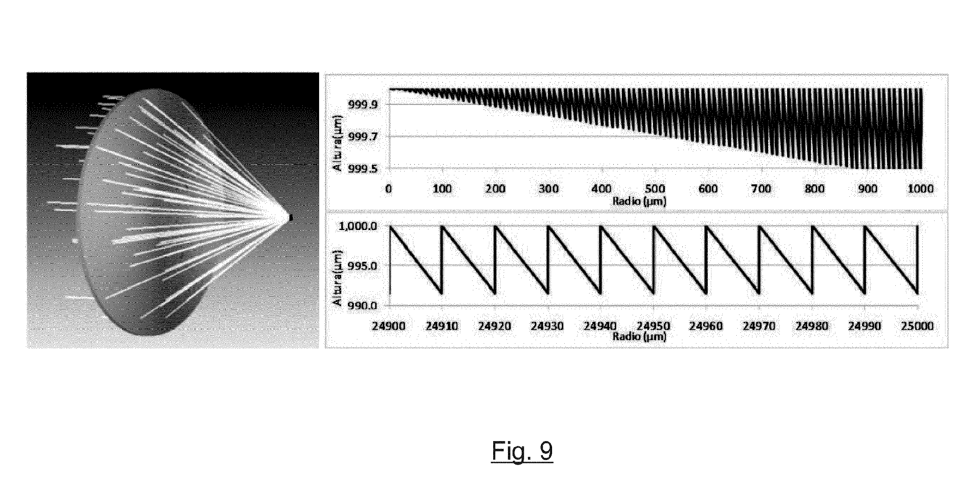

Figure 9 shows a known Fresnel lens, which is designed on a large scale (with prism dimensions on the order of millimetres or hundreds of micrometres) and using the principles of Geometrical Optics whereby light is refracted due the prism angle ($\varepsilon$). A common approach for a Fresnel lens design is to use rings of prisms of a constant pitch (d). This design approach could, in principle, apply to a Fresnel lens with small prisms, which might be called a "micro-Fresnel" lens. A multi-order lens may have prisms of a fixed pitch for instance of $10\mu$m. The prism height varies from the centre to the edge of the lens in order to maintain the correct prism angle at each position. For instance, this lens in figure 9 may be 50mm diameter, 35mm focal length, 1mm thick and the design is optimised for a wavelength of 500nm.

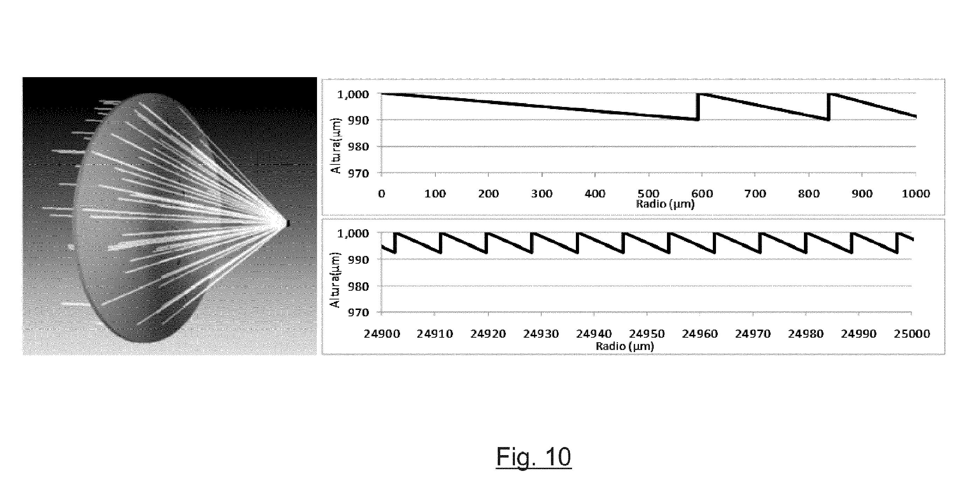

Figure 10, on the other hand, shows a basically identical lens but designed according to the principles of multi-order diffractive optics with $\lambda_D$ = 500nm and $q$=10. In the case both the pitch and prism height vary from the centre to the edge of the lens. Towards the edge of the lens the prism pitch is approximately $10\mu$m (similar to the design of figure a). At any point on the radius the prism angle is the same for each lens and so if they were analysed using just the theory of geometrical optics they would have the same characteristics (focus spot size, transmission efficiency etc.). Indeed, if the designs were on the scale of millimetres the two lens would in fact perform the same.

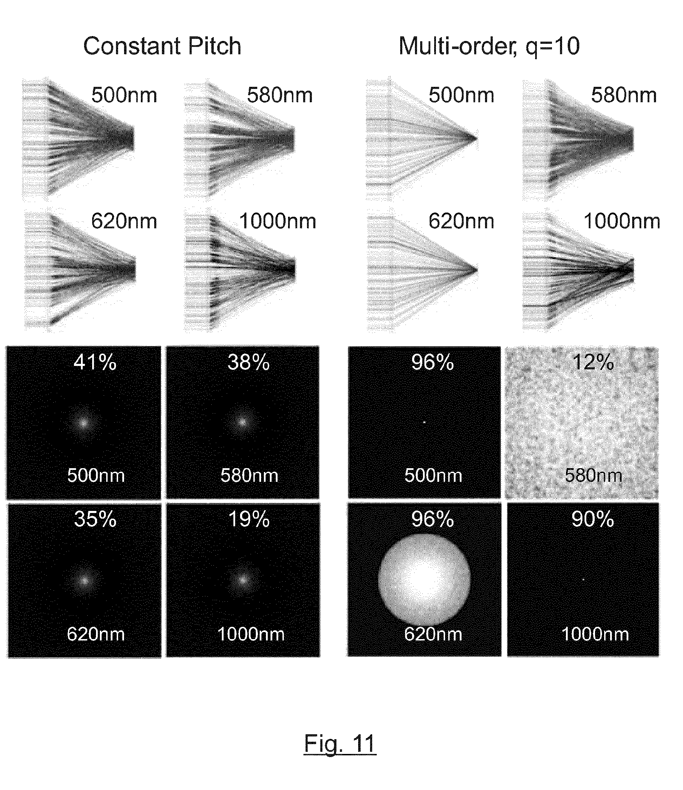

However, if they are analysed using the theory of diffraction their performances would be different (and would be different in practice). Consider that the objective of this lens is to focus light of a range of wavelengths on to a receiver which is 1mm x 1mm. Consider the wavelengths, 500nm (green), 580nm (orange), 620nm (red) and 1000nm (infra red). The performance of these lenses is shown in figure 11.

The standard micro-Fresnel lens performs similarly for different wavelengths whereas the multi-order diffractive lens performs either very well or very badly depending on the wavelength. This performance characteristic is therefore useful for situations where certain wavelengths (or wavebands) are more relevant than others. This may be because the source spectrum (e.g. the sun) has specific waveband peaks, the lens material (or any optical material in the beam path) has an absorption variation across the spectrum, or the receiver material has a non-uniform absorption spectrum. In the example above, if wavelengths around 500nm, 620nm and 1000nm were particularly important the multi-order diffractive lens would collect the light more efficiently than a similar Fresnel lens designed according to geometrical optics. If other wavebands were important the lens could be design to be optimised for those wavebands instead.

<u>References</u>

1 diffraction grating;
2 slit, aperture;
3 diffracted ray in phase;
4 diffracted ray in phase;
5 diffracted ray not in phase;
6 prism;
d pitch of the prism 6;
$S_1$ first surface for receiving light;
$S_2$ second surface for exiting light;
7 upper facet of prism 6;
8 lower facet of prism 6;
9 conventional diffracting lens;
10 Fresnel lens;
11 tilted surface for receiving / exiting light;
$\varepsilon$ angle of the prism;
F focal region;
E axis where the focal region is;
q: design order;

$\theta$: diffraction angle;
$\theta_D$: design diffraction angle;
$\lambda_D$: design wavelength;
$\lambda$: wavelength;

**Claims**

1. A multi-order diffractive lens for concentrating light comprising:

   a first lens surface ($S_1$) for receiving the incident light;
   a second lens surface ($S_2$) for exiting the light, comprising a plurality of concentric rings, which in cross section are prisms (6) shaped, a plurality of the prisms (6) have a first lower facet (8) and a second upper facet (7) inclined an angle, $\varepsilon$, from the vertical axis (Y), **characterised in that** the pitch of the prisms, d, is in the range of micrometers and the angles, $\varepsilon$, of the prisms is chosen in dependence upon:

   - the design wavelength, $\lambda_D$,
   - the design angle of diffraction, $\theta_D$,
   - the diffraction order, m, of the multi-order lens,
   - the design order, q.

2. A diffractive lens according to claim 1, wherein the first facet (8) is substantially horizontal with respect to an axis (E) where the focal (F) region is.

3. A diffractive lens according to claim 1 or 2, wherein the plurality of prisms (6) are arranged successively in a circular fashion.

4. A diffractive lens according to any of previous claims, wherein at least a surface ($S_1$, $S_2$) of the lens is tilted (11).

5. A diffractive lens according to any of previous claims, wherein the prism height and the pitch increase from the centre to the edge of the lens.

6. A diffractive lens according to any of previous claims, wherein the pitch of the prisms is greater than 1 micrometer and lesser than 100 micrometers.

m=-2

m=-1

m=0

m=1

m=2

1

_Fig. 1_

2

dsin θ

θ

3

d

4

m=1

_Fig. 2_

Fig. 3

Fig. 4

Fig. 5

Fig. 6

Fig. 7

Fig. 8

Fig. 9

Fig. 10

Fig. 11

**EUROPEAN SEARCH REPORT**

Application Number

EP 12 18 8757

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 5 589 982 A (FAKLIS DEAN [US] ET AL) 31 December 1996 (1996-12-31) * abstract * * column 4, line 23 - column 8, line 15 * * pages 1-4, columns 5,6; figure 1 * ----- | 1-6 | INV. G02B5/18 |
| X | FAKLIS D ET AL: "SPECTRAL PROPERTIES OF MULTIODER DIFFRACTIVE LENSES", APPLIED OPTICS, OPTICAL SOCIETY OF AMERICA, WASHINGTON, DC; US, vol. 34, no. 14, 10 May 1995 (1995-05-10), pages 2462-2468, XP000511442, ISSN: 0003-6935, DOI: 10.1364/AO.34.002462 * abstract * * page 2462, left-hand column, paragraph 2 - page 2462, right-hand column, paragraph 1 * * page 2463, right-hand column, last paragraph - page 2465, left-hand column, paragraph 1 * * figures 1,3 * ----- | 1-6 | |
| X | QUERTEMONT E ET AL: "Multi-order diffractive optical elements for achromatic interconnections at 1.30 mum and 1.55 mum", OPTICS COMMUNICATIONS, NORTH-HOLLAND PUBLISHING CO. AMSTERDAM, NL, vol. 140, no. 4-6, 1 August 1997 (1997-08-01), pages 191-194, XP004082618, ISSN: 0030-4018, DOI: 10.1016/S0030-4018(97)00204-6 * Multi Order diffractive element; Simulation Results; page 192, left-hand column, paragraph 6 - page 193, left-hand column, last paragraph * ----- -/-- | 1-6 | TECHNICAL FIELDS SEARCHED (IPC) G02B |

The present search report has been drawn up for all claims

| Place of search | Date of completion of the search | Examiner |
|---|---|---|
| Munich | 5 February 2013 | von Hentig, Roger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 12 18 8757

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 279 992 A2 (ESCHENBACH OPTIK GMBH & CO [DE]) 29 January 2003 (2003-01-29) * paragraph [0027] - paragraph [0032] * * figures 5-7 * ----- | 1-6 | |
| X | US 2010/238400 A1 (VOLK DONALD A [US]) 23 September 2010 (2010-09-23) * paragraph [0188] - paragraph [0189] * * figures 13-18a * ----- | 1-6 | |

TECHNICAL FIELDS
SEARCHED      (IPC)

The present search report has been drawn up for all claims

| Place of search | Date of completion of the search | Examiner |
|---|---|---|
| Munich | 5 February 2013 | von Hentig, Roger |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 18 8757

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2013

| Patent document cited in search report | | Publication date | Patent family member(s) | | Publication date |
|---|---|---|---|---|---|
| US 5589982 | A | 31-12-1996 | NONE | | |
| EP 1279992 | A2 | 29-01-2003 | DE | 10234216 A1 | 06-03-2003 |
| | | | EP | 1279992 A2 | 29-01-2003 |
| US 2010238400 | A1 | 23-09-2010 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5589982 A
- US 7025456 B2
- US 7093938 B2
- US 20080278681 A1

**Non-patent literature cited in the description**

- **SINZINGER ; M. TESTORF.** Transition between diffractive and refractive micro-optical components. *Appl. Opt.,* 1995, vol. 34, 5970-5976